# EUROPEAN PATENT APPLICATION

(11) **EP 4 796 417 A1**
(43) Date of publication of application: **26.08.2026**
(21) Application number: 25180255.9
(22) Date of filing: 02.06.2025
(51) Int. Cl.: B62D 21/14, B62D 21/10, B62D 61/00, B62D 63/02

(54) **VARIABLE VEHICLE**

(30) Priority: 24.02.2025 KR 20250023626
(71) Applicant: Hyundai Mobis Co., Ltd., Gangnam-gu Seoul 06141 (KR)
(72) Inventor: MIN, Kyong Won, 16891 Yongin-si (KR); LEE, Tae Heon, 16891 Yongin-si (KR)
(74) Representative: Vossius & Partner Patentanwälte Rechtsanwälte mbB

(57) **Abstract**

A variable vehicle, such as a dimensionally variable vehicle, is provided. The variable vehicle includes a body portion, an extension portion insertable into the body portion and moveable to an outside of the body portion so that at least a portion of the extension portion is exposed, wheels disposed on a lower side of the body portion, the wheels being connected to each other by a link portion, and a drive device to individually drive the wheels to change the arrangement of the wheels. The extension portion is connected to the link portion, and the arrangement of the link portion and the extension portion is changed based on the arrangement of the wheels.

## Description

### CROSS-REFERENCE TO RELATED APPLICATION

This application claims priority to and the benefit of Korean Patent Application No. 10-2025-0023626, filed on February 24, 2025, the disclosure of which is incorporated herein by reference in its entirety.

### BACKGROUND

### 1. Field

The present invention relates to a variable vehicle, and more particularly, to a variable vehicle capable of changing and adjusting its cross-sectional area.

### 2. Description of the Related Art

In the case of purpose-built mobility (or purpose-built vehicles (PBVs)) that are designed and manufactured to perform a specific purpose or function, the shape of the vehicle itself needs to be changed to perform the corresponding purpose or function. As one example, the purpose-based mobility for transporting cargo or the like needs to implement a large internal area while loading and transporting the cargo, but after finishing the transportation of the cargo, needs to be changed to a small internal area to be parked and stored. Even when a vehicle is not the purpose-based mobility, the size of the vehicle may be adjusted depending on the number of occupants riding in the vehicle.

There is a need for a technology capable of easily changing the size of the vehicle by the demand to change the size of the vehicle as described above.

### SUMMARY

One embodiment of the present invention is directed to providing a variable vehicle capable of changing its area depending on a situation.

Problems to be solved by the present invention are not limited to those mentioned above, and other problems not mentioned will be clearly understood by those skilled in the art from the following description.

In a general aspect of the disclosure, a variable vehicle includes: a body portion; an extension portion insertable into the body portion and configured to move to an outside of the body portion so that at least a portion of the extension portion is exposed; a plurality of wheels disposed on a lower side of the body portion, the wheels being connected to each other by a link portion; and a drive device configured to individually drive the wheels to change the arrangement of the wheels, wherein the extension portion is connected to the link portion, and wherein the arrangement of the link portion and the extension portion is changed based on the arrangement of the wheels.

The link portion may be bendable in a direction toward a center of the body portion.

The link portion connecting the wheels may be unfolded in response to a distance between adjacent wheels being increased by the drive device.

The extension portion may be connected to a bent point of the link portion.

The extension portion may include a first extension portion that is moveable in a first direction based on a center of the body portion; and a second extension portion that is moveable in a second direction intersecting the first direction.

The first extension portion and the second extension portion may be individually movable based on the driving of the wheel.

The extension portion may be connected to the link portion through a connecting pin, wherein the connecting pin may be seated inside a guide hole formed on the lower side of the body portion to slide inside the guide hole depending on the arrangement of the link portion.

The variable vehicle may further include a brake disposed at a portion where the connecting pin and the guide hole come into contact, wherein the brake may be configured to fix a position of the connecting pin.

The variable vehicle may further include a position sensor configured to detect the position of the connecting pin, wherein the brake may be further configured to fix the position of the connecting pin in response to the connecting pin being disposed at a position preset by a user.

The variable vehicle may further include an actuator provided on one side of the extension portion, wherein the actuator may be configured to provide a driving force in a direction of moving the extension portion toward the outside of the body portion.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIGS. 1 and 2 are views illustrating an appearance of a variable vehicle according to one embodiment of the present invention;
FIGS. 3 and 4 are views illustrating a lower portion of a variable vehicle according to one embodiment of the present invention;
FIG. 5 is an exploded perspective view of a variable vehicle according to one embodiment of the present invention;
FIGS. 6A to 6C are views illustrating a state in which an area of a variable vehicle according to one embodiment of the present invention is increased;
FIGS. 7 to 9 are views illustrating a state in which the area of the variable vehicle according to the embodiment is increased;
FIG. 10 is a drawing illustrating a lower part of a body portion according to the embodiment; and
FIG. 11 is a view illustrating an actuator of the variable vehicle according to the embodiment.

### DETAILED DESCRIPTION

Since the present invention may be variously modified and have several embodiments, specific embodiments thereof will be illustrated in the drawings and described in detail. However, this is not intended to limit the present invention to the specific embodiments, and it should be understood to include all modifications, equivalents, and substitutes included in the spirit and scope of the present invention. In describing the present invention, when it is determined that the detailed description of the related art may obscure the subject matter of the present invention, the detailed description thereof will be omitted.

While terms "first," "second," etc., may be used herein to describe various elements, such elements should not be limited by the terms. These terms are only used to distinguish one element from another element.

Terms used in the present application are merely provided to describe specific embodiments, and are not intended to limit the present invention. The singular forms, "a", "an", and "the" are intended to include the plural forms as well, unless the context clearly indicates otherwise. In the present application, it will be understood that terms "include," "have," or the like are intended to specify the presence of features, integers, steps, operations, elements, components, and/or combinations thereof stated in the specification, but do not preclude the possibility of the presence or addition of one or more other features, integers, steps, operations, elements, components, or combinations thereof in advance.

In addition, throughout the specification, when "connected" is used, this does not only mean two or more components are directly connected, but means that two or more components are indirectly connected through another component, that the components are not only physically connected, but also electrically connected, or that the components are integrated although the components are referred to as different names depending on a location or a function.

Further, when a component is described as being formed or disposed "on (above) or under (below)" another component, the term "on (above) or under (below)" includes not only when two components are in direct contact with each other, but also when one or more other components are formed or disposed between the two components. Further, when a component is described as being "on (above) or below (under)," the description may include the meanings of an upward direction and a downward direction based on one component.

Hereinafter, one embodiment of a variable vehicle according to the present invention will be described in detail with reference to the accompanying drawings, and in giving description with reference to the accompanying drawings, identical or corresponding components will be assigned the same numbers and overlapping descriptions thereof will be omitted.

The variable vehicle according to the embodiment of the present invention may include a body portion 10, an extension portion 20 capable of being inserted into the body portion 10, wheels 40 that are disposed on a lower side of the body portion 10 and connected to each other by link portions 30, and a drive unit (not illustrated).

The drive unit may control the steering of the wheels 40 and provide a driving force. The wheels 40 and the drive unit may be formed as one module. In the case of a vehicle equipped with four wheels 40, four drive units may be equipped, and the drive units corresponding to the respective wheels 40 may be equipped as modules. That is, one wheel 40 and one drive unit may form a drive module.

On the plane on which the vehicle moves, the drive module may operate in four directions. When described based on an up-down direction and a left-right direction, the wheel 40 may be disposed to be movable in the up-down direction and may be disposed to be movable in the left-right direction perpendicular thereto. The drive unit may individually control the steering of the wheel 40.

The drive unit may provide the driving force to the wheel 40. The drive unit may provide the driving force so that the wheel 40 rotates in a first direction, and may provide the driving force so that the wheel 40 rotates in a direction opposite to the first direction. A moving direction of the vehicle may be adjusted depending on the direction in which the driving force rotates the wheel 40.

The variable vehicle according to the present invention may have a variable area through the body portion 10 that functions as a vehicle body and the extension portion 20 inserted into the body portion 10. An area of the vehicle body is varied in a manner of adjusting the degree to which the extension portion 20 is exposed from the body portion 10. When the extension portion 20 is fully inserted into the body portion 10, only the body portion 10 may be exposed in appearance, which corresponds to a minimum area. When the extension portion 20 is exposed to the maximum extent to the outside of the body portion 10, the area of the vehicle body increases by the area of the exposed extension portion 20.

Movement of the extension portion 20 may be implemented through the wheel 40 and the drive unit. The drive unit may adjust the direction of the wheel 40 and apply a driving force to the wheel 40 to move the extension portion 20 linked with the wheel 40. The wheel 40 and the extension portion 20 may be connected through a link structure. The detailed structure and operation method are described below.

Since the wheel 40 and the drive unit may apply the driving force in all directions on a plane on which the vehicle body is placed, in the variable vehicle equipped with a plurality of extension portions 20, it is also possible to implement exposure of only some of the extension portions 20.

The variable vehicle may move the extension portion 20 in different ways depending on an environment in which the vehicle is placed and a user's needs.

Therefore, the variable vehicle according to the embodiment may further include a control unit that controls the drive unit. The control unit controls the operation of the drive unit according to the operation of the user. The control unit may operate the wheel 40 to steer in a preset direction, and may drive the wheel 40 through the drive unit to change the arrangement of the wheel 40 to a preset arrangement. That is, the control unit may implement the preset arrangement of the wheel 40 based on the arrangement of the extension portion 20 desired by the user.

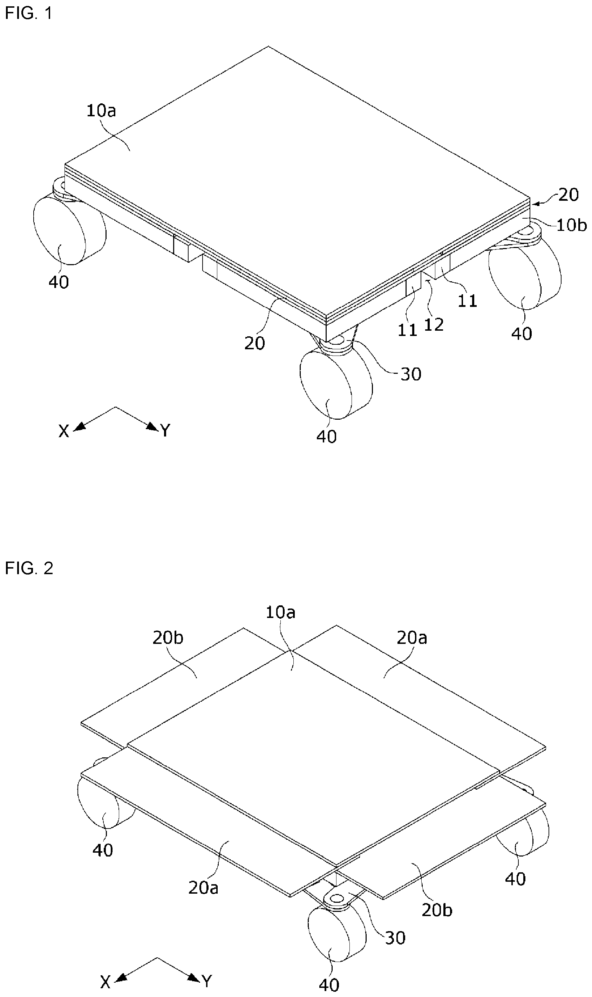

FIGS. 1 and 2 are views illustrating an appearance of a variable vehicle according to one embodiment of the present invention.

Referring to FIGS. 1 and 2, it can be seen that the extension portion 20 is exposed from the body portion 10. The body portion 10 may be provided so that an internal space is formed. The extension portion 20 may be accommodated in the internal space of the body portion 10. The extension portion 20 may be moved to be exposed to the outside from the internal space of the body portion 10. The shape of the body portion 10 is illustrated as being rectangular, but there is no limitation on the shape of the body portion 10.

In the present embodiment, the extension portion 20 is illustrated as being exposed along an edge of the body portion 10. The extension portion 20 may be formed to be smaller than the body portion 10, and may be accommodated in the internal space of the body portion 10. Alternatively, the extension portion 20 may be formed to have the same size as the body portion 10, and the area of the extension portion 20 may also be formed to be larger than that of the body portion 10.

When the extension portion 20 is formed with the same area as the body portion 10, the extension portion 20 may be exposed to one side of the body portion 10, and the area of the vehicle body may be formed to be up to twice the area of the body portion 10 depending on the movement of the extension portion 20.

When the extension portion 20 is formed with a larger area than the body portion 10, the body portion 10 may cover at least a portion of the area of the extension portion 20. The extension portion 20 may be moved so that the size of the region where the body portion 10 and the extension portion 20 overlap becomes smaller, thereby allowing the area of the vehicle body to be expanded.

In the case where the variable vehicle includes a rectangular body portion 10 as in the present embodiment, the extension portion 20 may expand the area of the vehicle body in a manner of protruding from each side of the body portion 10. In this case, a total of four extension portions 20 may be provided. A width of each extension portion 20 may correspond to a length of each side of the body portion 10.

The total area of four extension portions 20 may be formed to be larger than the area of the body portion 10. In this case, in order to accommodate the extension portion 20 inside the body portion 10, the extension portion 20 and the body portion 10 may be disposed in a stacked manner.

The extension portion 20 may include a pair of first extension portions 20a facing each other and a pair of second extension portions 20b facing each other. This will be described based on an X-axis and a Y-axis illustrated in FIGS. 1 and 2. The first extension portions 20a may be moved in an X-axis direction of the body portion 10, and the second extension portions 20b may be moved in a Y-axis direction of the body portion 10.

The second extension portion 20b may be disposed on the upper side of each first extension portion 20a. A height of the internal space of the body portion 10 may be formed to correspond to a combined height of the first extension portion 20a and the second extension portion 20b.

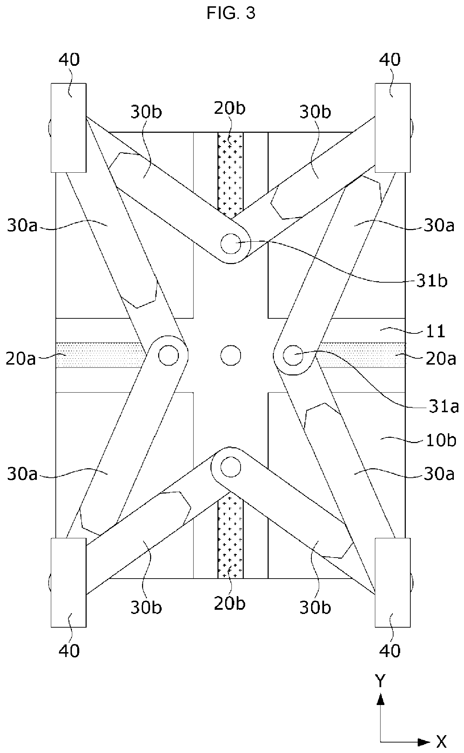

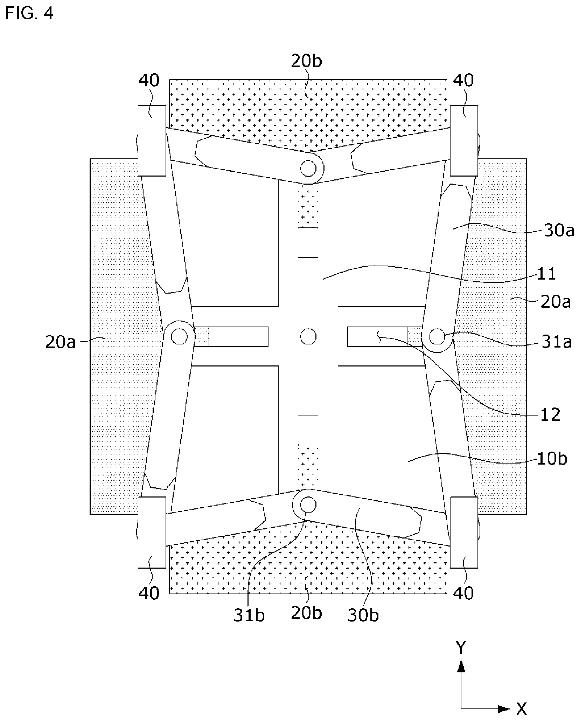

FIGS. 3 and 4 are views illustrating a lower portion of a variable vehicle according to one embodiment of the present invention.

Referring to FIGS. 3 and 4, the lower portion of the variable vehicle may be seen before and after the area of the variable vehicle is expanded.

Wheels 40 according to the present invention may be disposed on the lower side of the body portion 10. The wheels 40 may be connected to each other by a link portion 30. The link portion 30 may be bent at least in part. Depending on the arrangement of the wheel 40, the bent portion of the link portion 30 may remain in a bent state or may be unfolded.

The extension portion 20 may be connected to the link portion 30. As the arrangement of the link portion 30 is also changed depending on the arrangement of the wheel 40, the arrangement of the extension portion 20 may be changed depending on the arrangement of the link portion 30. In this way, the wheel 40 may be driven to control whether or not the extension portion 20 is exposed and the degree of exposure.

In the case of the present invention, each wheel 40 is connected through the link portion 30 including one hinge 31. The link portion 30 may include a first link portion 30a connected to the first extension portion 20a and a second link portion 30b connected to the second extension portion 20b. Each extension portion 20 may be connected to the hinge 31 of the link portion 30.

The wheel 40 functions to support the vehicle body. The wheel 40 is disposed on the lower side of the body portion 10, and the arrangement may be changed based on the body portion 10. Referring to FIGS. 1 to 4, the wheel 40 may be disposed at a lower part of the body portion 10 or alternatively may be moved to the outside of the body portion 10. The arrangement of the link portion 30 may be also changed depending on the movement of the wheel 40.

The arrangement of the wheel 40 illustrated in FIG. 4 illustrates a state in which the wheel 40 is moved to the maximum extent toward the outside of the body portion 10. A distance between the wheels 40 may be increased, and to implement this, the link portion 30 connecting the wheels 40 may be unfolded. As the link portion 30 is unfolded, the extension portion 20 connected to the link portion 30 may be moved from the internal space of the body portion 10 to the outside of the body portion 10.

The link portion 30 may include one hinge 31. Alternatively, the link portion 30 may include a plurality of hinges 31. In the present embodiment, it is illustrated that the link portion 30 is provided with one hinge 31, and the extension portion 20 is connected to the hinge 31. However, it is also possible for the link portion 30 to include a plurality of hinges 31, and for the extension portions 20 to be connected to the respective hinges 31.

The link portion 30 may be bent toward the center of the body portion 10. The link portion 30 may be bent based on a portion where the hinge 31 is formed. When the link portion 30 is bent, a state in which the distance between the wheels 40 is narrowed may be implemented.

When the link portion 30 is bent toward the center of the body portion 10, the hinge 31 is moved toward the center of the body portion 10. In this arrangement, when the distance between the wheels 40 increases and the link portion 30 is unfolded, the hinge 31 is moved from the center of the body portion 10 to the outside. The extension portion 20 connected to the hinge 31 may be moved to the outside of the body portion 10 in conjunction with the arrangement of the link portion 30.

Since the link portion 30 is bent to face the center of the body portion 10, the link portion 30 may not be exposed to the outside of the body portion 10. That is, when the link portion 30 is bent or unfolded, the body portion 10 may cover an upper side of the link portion 30. In this way, the link portion 30 is not recognized by a user's eyes, and the sophistication of the external design may be secured.

FIGS. 1 to 4 illustrate that all the extension portions 20 are simultaneously moved. Alternatively, it is also possible to adjust the arrangement of the wheel 40 so that only some of the plurality of extension portions 20 are moved.

A guide hole 12 that guides the movement of the extension portion 20 may be formed in the lower portion of the variable vehicle. The guide hole 12 may be formed on the lower side of the body portion 10.

The extension portion 20 and the link portion 30 may be connected through a pin structure. A connecting pin 21 may protrude from the extension portion 20. The connecting pin 21 may be rotatably connected to the hinge 31 of the link portion 30. The link portion 30 may be rotated using the connecting pin 21 as a rotating shaft. The connecting pin 21 may function to connect the connecting portion and the link portion 30 and at the same time, function as a rotating shaft when the link portion 30 is bent or unfolded.

The connecting pin 21 may be seated inside the guide hole 12 formed in the body portion 10. The connecting pin 21 may be slidable along the guide hole 12 inside the guide hole 12. When the link is unfolded or bent according to the disposition of the wheel 40, the connecting pin 21 linked with the link slides inside the guide hole 12. The guide hole 12 may function to fix the connecting pin 21 so that the connecting pin 21 and the extension portion 20 may be smoothly moved.

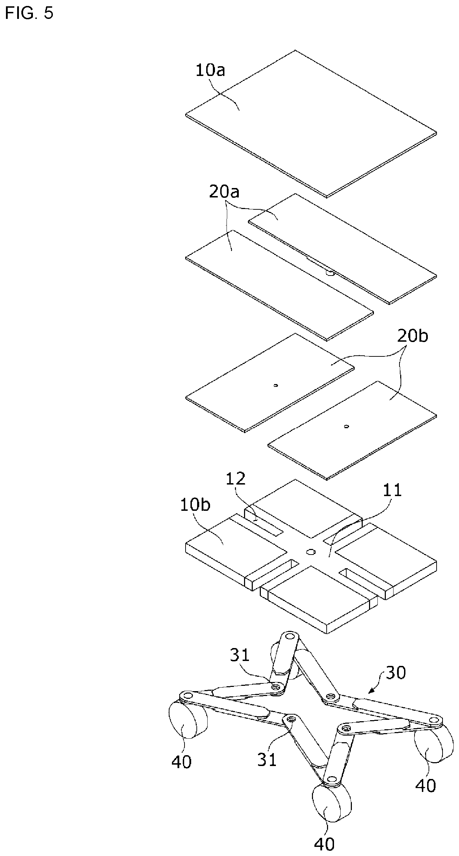

FIG. 5 is an exploded perspective view of a variable vehicle according to one embodiment of the present invention.

Referring to FIG. 5, the arrangement relationship of a body portion 10, a link portion 30, and an extension portion 20 may be seen. An internal space may be formed in the body portion 10. The extension portion 20 may be inserted into the internal space. The internal space may correspond to a space surrounded by a pair of body portions 10a and 10b. In the present embodiment, the body portion 10 is formed by a pair of plates 10a and 10b forming upper and lower boundaries.

A plurality of extension portions 20 may be provided, and the extension portions 20 may be stacked and inserted into the internal space. A height of the internal space of the body portion 10 may correspond to a height of the stacked extension portions 20. In this case, even when the interior of the body portion 10 is empty, the body portion 10 may be supported by the extension portions 20. That is, when a user is positioned on the upper side of the body portion 10 or a heavy load is placed on the body portion 10, the internal space of the body portion 10 may be supported by the extension portions 20.

A connecting pin 21 may protrude from the extension portion 20. The connecting pin 21 may extend to the link portion 30 to which the extension portion 20 is connected. The connecting pin 21 and the link portion 30 are connected at the hinge 31 of the link portion 30. The link portion 30 may be rotatably connected based on the connecting pin 21. A guide hole 12 is formed in the lower part of the body portion 10 so that the connecting pin 21 may move. In the present embodiment, the connecting pin 21 is formed to protrude from a lower surface of the extension portion 20 in a direction in which the link portion 30 is disposed. The connecting pin 21 is disposed to pass through the body portion 10 and the link portion 30.

A chassis 11 may be formed at the lower part of the body portion 10. The guide hole 12 may be formed in the chassis 11, and the connecting pin 21 may be installed inside the guide hole 12. The chassis 11 may be formed of a separate material from the body portion 10. As a configuration in which the connecting pin 21 that is moved in conjunction with the movement of the wheel 40 and link portion 30 is seated, the chassis 11 may be formed of a material with low friction. In the present embodiment, the chassis 11 is formed in a cross shape, and the guide hole 12 is formed in at least a portion of an end of the chassis 11. A width of the guide hole 12 may correspond to a width of the connecting pin 21.

The present embodiment illustrates that each wheel 40 is connected to adjacent wheel 40 through the link portion 30. Therefore, two link portions 30 are connected to each wheel 40. Each link portion 30 may be disposed with a step between them.

In the present embodiment, it is illustrated that a second link portion 30b is disposed on top of a first link portion 30a.

Alternatively, each link portion 30 may be formed so that at least a portion thereof has a different thickness. For example, each of the links constituting the link portion 30 may include a first region A1 formed with a first thickness and a second region A2 formed with a second thickness that is thicker than the first thickness. Each of the first region A1 and the second region A2 may be sequentially formed in a longitudinal direction of the link.

In the present embodiment, the first regions A1 are formed on both sides of the second region A2 based on the second region A2. The first regions A1 extend from the upper and lower sides of the second region A2, respectively. That is, the link is formed in a point-symmetrical shape based on the center of the link.

The portions where the links are connected to each other may be disposed so that the first regions A1 of each link overlap. In this way, all the link portions 30 may be disposed on the same plane. Since the first region A1 and the second region A2 are formed with a predetermined step, the link portions 30 may be moved without interfering with each other. The second region A2 may be formed with a thickness twice the first region A1.

Hereinafter, a specific method by which the area of a variable vehicle including the above-described configuration is changed will be described. The method of changing the area of the variable vehicle may include controlling a direction of the wheel 40, providing a driving force to the wheel 40, moving the extension portion 20, and re-adjusting the direction of the wheel 40.

The drive unit may first control the direction of the wheel 40 so that the moved wheel 40 is disposed to face the direction in which the wheel is to be moved. After the direction of the wheel 40 is adjusted, the drive unit may provide a driving force to the wheel 40. The wheel 40 may be moved a predetermined distance in the direction in which the wheel 40 faces based on the driving force. As the wheel 40 moves, the link portion 30 may be unfolded or bent accordingly. Depending on the arrangement of the link portion 30, the extension portion 20 connected to the link portion 30 may be moved. Then, the direction of the wheel 40 may be re-adjusted to fix the arrangement of the moved extension portion 20. The wheel 40 may be disposed to face a direction intersecting the existing direction of travel so that the area of the extension portion 20 is no longer changed.

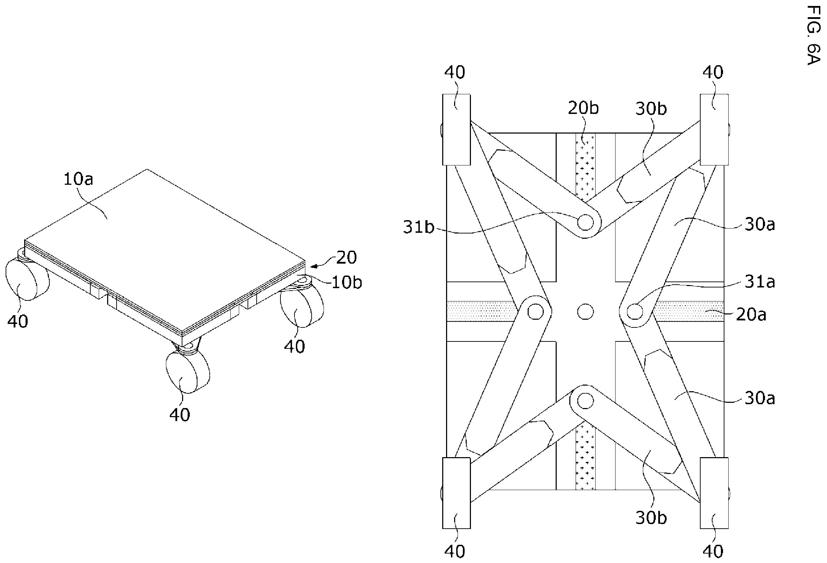

FIGS. 6A to 6C are views illustrating a state in which an area of a variable vehicle according to one embodiment of the present invention is increased.

FIGS. 6A to 6C sequentially illustrate states when the area of the variable vehicle is increased.

Changing the area of the variable vehicle includes controlling a direction of a wheel 40 of the variable vehicle, providing a driving force to the wheel 40, moving an extension portion 20, and re-adjusting the direction of the wheel 40.

FIG. 6A shows a state before the area of the variable vehicle is increased. A link portion 30 is disposed in a bent state, and the extension portion 20 is disposed in a state of being inserted into a body portion 10.

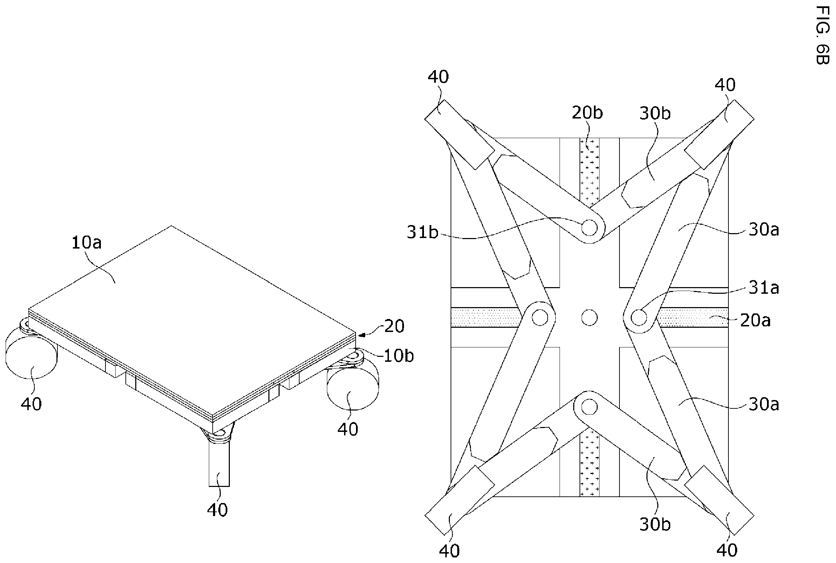

FIG. 6B shows a state of steering the wheels 40 to increase the area of the variable vehicle. In the present embodiment, it is described that the extension portion 20 extends from the body portion 10 in a first direction and a second direction. In the case of the body portion 10 formed in the rectangular shape, the extension portion 20 is exposed along all sides of the body portion 10.

The wheels 40 may be disposed adjacent to four corners of the body portion 10. The wheel 40 may be steered by the drive unit. The movement of the extension portion 20 is determined depending on the arrangement of the wheels 40 and the distance between the wheels 40. The drive unit may set the steering of the wheel 40 according to the preset arrangement of the extension portion 20.

In order to expose all the extension portions 20 in the first direction and the second direction as in the present embodiment, the wheels 40 may be steered away from the center of the body portion 10. When the wheels 40 are moved in the steered direction, a distance between the wheel 40 and adjacent wheel 40 may increase. When the distance between the wheels 40 increases, a bent portion of the link portion 30 connecting the wheel 40 may unfold.

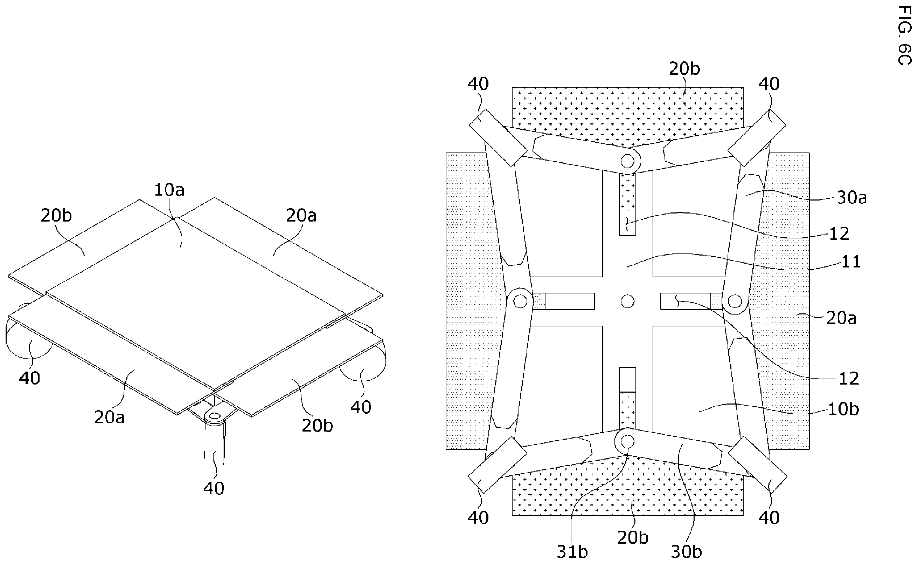

FIG. 6C illustrates a state in which the wheels 40 are driven and the arrangement thereof is changed, and accordingly, the arrangement of the link portions 30 connecting the wheels 40 and the extension portions 20 connected to the link portions 30 is changed.

In the present embodiment, the wheels 40 are moved outward from the center of the body portion 10. The wheels 40 positioned near four corners of the body portion 10 move away from the center of the body portion 10 and the distance between adjacent wheels 40 increases.

The wheels 40 are connected by the link portion 30. The link portion 30 may be at bent at least in part. In the present embodiment, the link portion 30 is formed by connecting two links. The two links may implement bending of the link portion 30 in a manner of being rotated using the connected portion as a hinge 31.

When a driving force is provided to the wheels 40 by the drive unit, the wheels 40 move in a steered direction. As the wheels 40 are moved, the distance between the wheels 40 increases. As in FIG. 6C, the distance between adjacent wheels 40 may increase overall. The link portion 30 is unfolded corresponding to the distance between the wheels 40. The link portion 30 is initially bent in a direction toward the center of the body portion 10. When the wheels 40 are moved to the outside of the body portion 10 and the distance between the wheels 40 increases, the link portion 30 may be unfolded.

The link portion 30 has a structure in which two links are connected around the hinge 31. The link rotates around the hinge 31 and the bent link portion 30 is unfolded. The hinge 31 is moved from the center of the body portion 10 to the outside of the body portion 10 depending on the arrangement of the wheels 40.

The extension portion 20 is connected to the link portion 30. The extension portion 20 may be connected to the hinge 31 of the link portion 30. As the hinge 31 is moved to the outside of the body portion 10, the extension portion 20 may also be moved to the outside of the body portion 10 corresponding to the movement, and may be exposed to the outside from the internal space of the body portion 10.

The extension portion 20 may include a first extension portion 20a and a second extension portion 20b, and the first extension portion 20a and the second extension portion 20b may be moved in different directions. In the present embodiment, illustrated X-axis and Y-axis correspond to a first direction and a second direction.

The first extension portion 20a and a first link portion 30a is moved in an X-axis direction. The first extension portion 20a and the first link portion 30a may be formed as a pair. One side of each of the first extension portion 20a and the first link portion 30a may be moved in a positive X-axis direction, and the other side of each of the first extension portion 20a and the first link portion 30a may be moved in a negative X-axis direction.

The second extension portion 20b and a second link portion 30b move in a Y-axis direction. The second extension portion 20b and the second link portion 30b may be formed as a pair. One side of each of the second extension portion 20b and the second link portion 30b may be moved in a positive Y-axis direction, and the other side of each of the second extension portion 20b and the second link portion 30b may be moved in a negative Y-axis direction.

The present embodiment corresponds to the embodiment based on the body portion 10 formed in the rectangular shape. There is no limitation on the shape of the body portion 10, and the shape of the extension portion 20 inserted into the body portion 10 and moved to the outside of the body portion 10 may also be changeably applied.

The body portion 10 may be formed in a polygonal shape, and may also be formed to include a curved surface. The extension portion 20 may protrude from an edge of the body portion 10 to function to expand the area of the body portion 10.

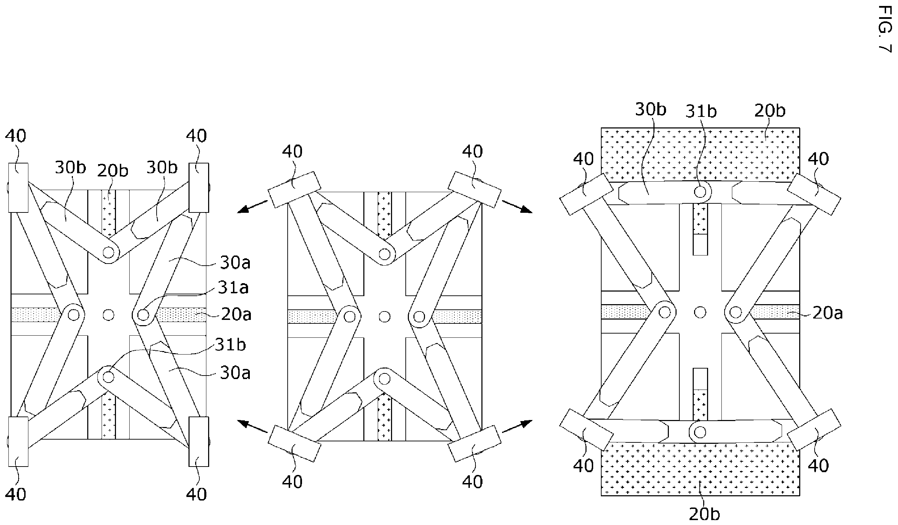

FIGS. 7 to 9 are views illustrating a state in which the area of a variable vehicle according to the embodiment is increased.

The wheels 40 and the drive unit may be individually operated, and the extension portions 20 that are moved by controlling the wheels 40 and the drive unit may be adjusted. That is, the arrangement of the extension portions 20 may be set in various modes.

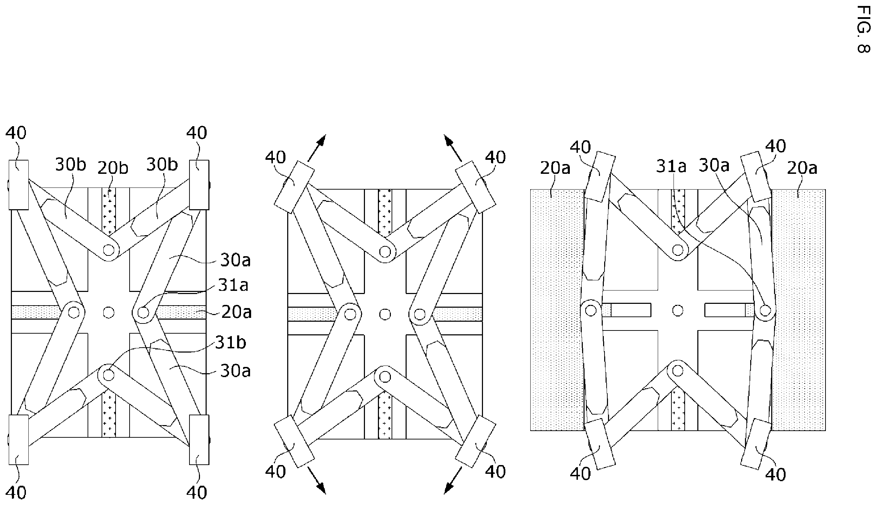

FIGS. 7 and 8 illustrate a mode in which either a first extension portion 20a or a second extension portion 20b is moved.

In order for the first extension portion 20a to be moved, a first link portion 30a is unfolded, and in order for the second extension portion 20b to be moved, a second link portion 30b is unfolded. In order to maintain a fixed arrangement of the second extension portion 20b at the same time as the first extension portion 20a is moved, only the first link portion 30a needs to be unfolded and the second link portion 30b needs to maintain a bent state.

As illustrated in FIG. 7, a mode in which the first extension portion 20a is exposed to the outside of the body portion 10 and the second extension portion 20b maintains a fixed arrangement is described. For the corresponding mode to be implemented, the drive unit may steer the wheel 40 in a specific direction.

The first extension portion 20a is moved in a first direction. In this case, a hinge 31a of the first link portion 30a is moved in the first direction. A hinge 31b of the second link portion 30b may maintain the fixed arrangement, and the second extension portion 20b may also maintain the fixed arrangement.

To implement this, the distance between the wheels 40 connected by the first link portion 30a may increase. The wheel 40 may be moved in a direction in which the distance between the wheels 40 connected by the first link portion 30a increases, but may be moved in a circular path based on the hinge 31 of the second link portion 30b. Each wheel 40 may use the hinge 31b of the second link portion 30b as the center of the circle, and the link of the second link portion 30b may be moved on a circumference of the circle corresponding to its radius.

The drive unit may control the wheel 40 to steer in a direction in which the wheel 40 touches the circle on the circumference of the corresponding circle. Then, when the drive unit provides the driving force to the wheel 40, the wheel 40 travels along the circular path based on the hinge 31b of the second link portion 30b.

The wheels 40 connected by the second link portion 30b may come closer to each other while travelling along the circular path. The wheels 40 connected by the first link portion 30a may be farther away from each other while traveling along the circular path. The first link portion 30a may be unfolded at the bent portion and the hinge 31a may be moved to the outside from the center of the body portion 10. The second link portion 30b may maintain the fixed arrangement of the hinge 31b while two links rotate based on the hinge 31b.

FIG. 8 corresponds to a mode in which the second extension portion 20b is exposed to the outside of the body portion 10 and the first extension portion 20a maintains the fixed arrangement.

In this case, the hinge 31a of the first link portion 30a maintains the fixed arrangement, and the hinge 31b of the second link portion 30b is moved in the second direction.

To implement this, the distance between the wheels 40 connected by the second link portion 30b may increase. The wheel 40 may be moved in a direction in which the distance between the wheels 40 connected by the second link portion 30b increases, but may be moved in a circular path based on the hinge 31a of the first link portion 30a. Each wheel 40 may use the hinge 31a of the first link portion 30a as the center of the circle, and the link of the first link portion 30a may be moved on a circumference of the circle corresponding to its radius.

The drive unit may control the wheel 40 to steer in a direction in which the wheel 40 touches the circle on the circumference of the corresponding circle. Then, when the drive unit provides the driving force to the wheel 40, the wheel 40 travels along the circular path based on the hinge 31a of the first link portion 30a.

The wheels 40 connected by the first link portion 30a may come closer to each other while travelling along the circular path. The wheels 40 connected by the second link portion 30b may be farther away from each other while traveling along the circular path. The second link portion 30b may be unfolded at the bent portion and the hinge 31b may be moved to the outside from the center of the body portion 10. The first link portion 30a may maintain the fixed arrangement of the hinge 31 while two links rotate based on the hinge 31a.

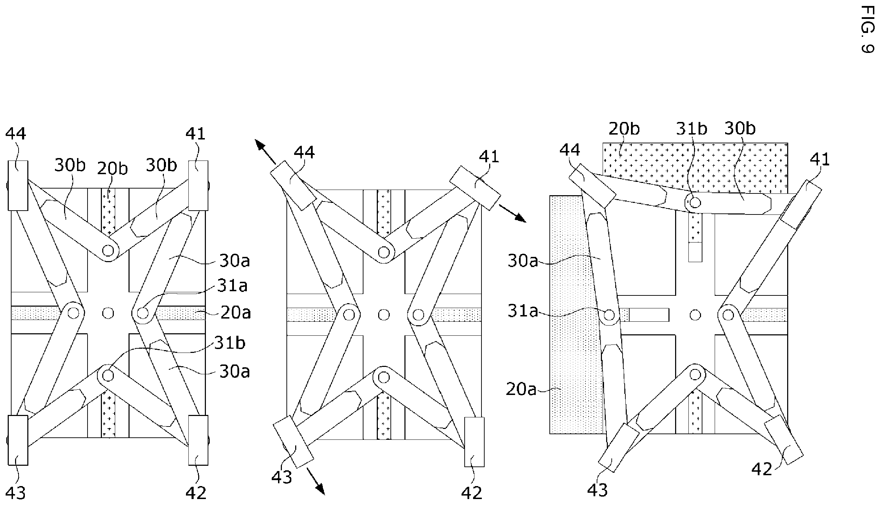

FIG. 9 shows a mode in which one sides of the first connecting portion and the second connecting portion, which are provided as a pair, are simultaneously extended. That is, in the body portion 10 formed in a rectangular shape, the mode is a mode in which the extension portion 20 near a specific vertex of the body portion 10 is moved.

Starting from the wheel 40 disposed at the upper right, clockwise, the wheels may be referred to as a first wheel 41, a second wheel 42, a third wheel 43, and a fourth wheel 44. The present embodiment describes the movement of the extension portion 20 adjacent to the vertex where the fourth wheel 44 is disposed.

The drive unit steers each wheel 40 to control the direction in which the wheel 40 is to be moved. The fourth wheel 44 is steered in a direction extending from the center of the body portion 10 toward the fourth wheel 44, that is, toward the outside of the body portion 10.

Directions of the first wheel 41 and the third wheel 43 are adjusted for a circular motion based on the hinges 31 of the link portions 30 connecting the first wheel 41 and the third wheel 43 and the second wheel 42. The first wheel 41 and the third wheel 43 are steered to the lower right based on the drawing.

Then, the drive unit provides the driving force to the wheels 40 to drive the wheels 40. The wheels 40 are moved in the steered direction, but a moving direction may be set by the arrangement of the link portions 30. The fourth wheel 44 is moved to the outside of the body portion 10. In the present embodiment, the fourth wheel 44 is moved to the upper left based on the drawing.

The first wheel 41 is rotated based on the hinge 31a of the first link portion 30a connecting the first wheel 41 and the second wheel 42. The third wheel 43 is rotated based on the hinge 31b of the second link portion 30b connecting the third wheel 43 and the second wheel 42. As the wheels 40 are moved, the link portions 30 connecting the first wheel 41 and the third wheel 43 and the fourth wheel 44 may be unfolded. The link portions 30 are unfolded and the extension portions 20 connected to the link portions 30 are each moved.

After the movement of the extension portions 20 is finished, the drive unit may steer the wheels 40 at a specific angle. In the present embodiment, the steering direction of the wheels 40 may be set so that the wheels 40 may stably support the vehicle body in the arrangement where the extension portion 20 has been moved.

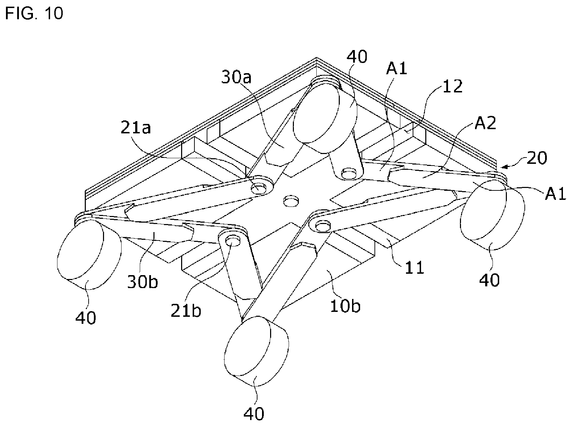

FIG. 10 is a view illustrating a lower part of the body portion according to the embodiment.

Referring to FIG. 10, a connection structure of the link portion 30 and the extension portion 20 may be seen.

In the present embodiment, a chassis 11 is formed on the lower side of the rectangular body portion 10, and the guide hole 12 is formed in the chassis 11. The chassis 11 is formed in a cross shape and its end extends to the boundary of the body portion 10. The guide hole 12 is formed in the chassis 11, and the connecting pin 21 protruding from the extension portion 20 is installed inside the guide hole 12. The connecting pin 21 passes through the guide hole 12 to be connected to the link portion 30. The link portion 30 has a structure in which two links are connected. Each link is rotatably connected using the connecting pin 21 as a rotating shaft. The connecting pin 21 functions as the hinge 31 of the link portion 30.

The connecting pin 21 passes through the link, and the link may rotate in a state of being in contact with a circumferential surface of the connecting pin 21. An insertion hole for inserting the connecting pin 21 may be formed in the link. The link of FIG. 10 includes a first region A1 and a second region A2. The first region A1 is formed to have a thinner thickness than the second region A2. The first region A1 may be formed at both ends of the second region A2. That is, the link may be formed so that at least a partial region is thicker than the other region in a longitudinal direction. The first region A1 of each link corresponds to a coupling site.

In the present embodiment, the first region A1 is stacked and fastened to a portion connected to the wheel 40 and a portion connected to the connecting pin 21.

The chassis 11 may be equipped with a brake (not illustrated) that may fix the arrangement of the connecting pin 21. The brake may be disposed along the guide hole 12 of the chassis 11. The brake functions to restrain the connecting pin 21 when the connecting pin 21 is disposed at a target position. The brake may be electrically operated. The brake may be moved from the outside of the guide hole 12 toward the connecting pin 21 to restrain the connecting pin 21.

The chassis 11 may be equipped with a sensor (not illustrated) to detect the arrangement of the connecting pin 21. The sensor may detect the position of the connecting pin 21 to determine whether the connecting pin 21 is positioned at the target position. As the sensor, an ultrasonic sensor, an infrared sensor, or the like, may be provided. The sensor may be disposed inside the guide hole 12.

The arrangement of the extension portion 20 may be fixed in a manner of fixing the arrangement of the connecting pin 21 through the sensor and the brake. The arrangement of the extension portion 20 may be linearly adjusted. Once the extension portion 20 is positioned in the desired arrangement, the user may operate the brake to fix the arrangement of the extension portion 20.

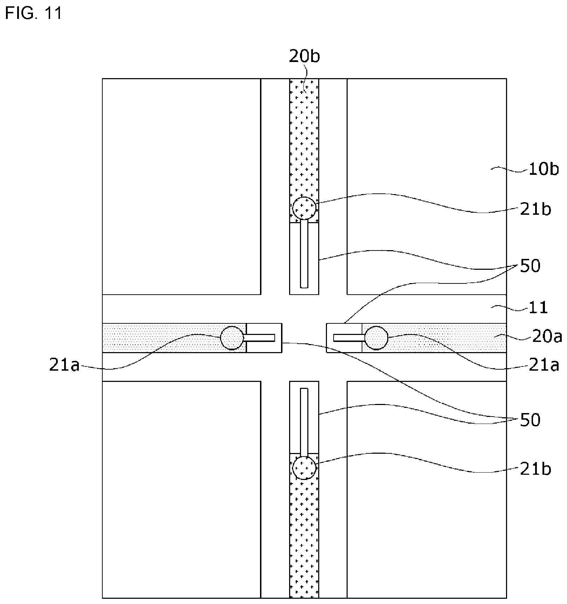

FIG. 11 is a view illustrating an actuator of the variable vehicle according to the embodiment.

An actuator 50 may be disposed inside the body portion 10. The actuator 50 may provide a driving force to the connecting pin 21 and the link portion 30.

Basically, the link portion 30 and the extension portion 20 are moved through the driving force of the wheels 40. When the drive unit provides the driving force to the wheels 40 so that the wheels 40 are moved, the link portion 30 and the extension portion 20 are moved accordingly. The actuator 50 may provide the driving force to the connecting pin 21 and the link portion 30 to assist the driving force of the wheels 40.

The actuator 50 may be connected to the connecting pin 21. The actuator 50 may provide the driving force to move the connecting pin 21 in a longitudinal direction of the guide hole 12 from inside the guide hole 12. When the link portion 30 is bent or unfolded while the wheels 40 are moved, the actuator 50 may also provide the driving force to the connecting pin 21. The extension portion 20 may be stably moved by the driving force of the actuator 50.

The actuator 50 may operate in conjunction with the driving of the wheel 40. Alternatively, the actuator 50 may provide the driving force independently of the wheel 40. In a situation where a separate driving force is not provided to the wheels 40, the movement of the extension portion 20 may be implemented by moving the connecting pin 21 inside the guide hole 12.

According to one embodiment of the present invention, an extension portion accommodated inside a body portion can be moved outside the body portion in conjunction with the driving and arrangement of a wheel and the degree to which the extension portion is moved outside the body portion can be adjusted, thereby adjusting an area of a vehicle.

Various beneficial advantages and effects of the present invention are not limited by the contents described above and should be easily understood through a description of a detailed embodiment of the present invention.

Although the specific embodiments of the present invention have been described above, it is understood that one ordinary skilled in the art can make various changes and modifications to the present invention without departing from the spirit and scope of the present invention as hereinafter claimed.

## Claims

1. A variable vehicle comprising:
a body portion;
an extension portion insertable into the body portion and configured to move to an outside of the body portion so that at least a portion of the extension portion is exposed;
a plurality of wheels disposed on a lower side of the body portion, the wheels being connected to each other by a link portion; and
a drive device configured to individually drive the wheels to change the arrangement of the wheels,
wherein the extension portion is connected to the link portion, and
wherein the arrangement of the link portion and the extension portion is changed based on the arrangement of the wheels.

2. The variable vehicle of claim 1, wherein the link portion is bendable in a direction toward a center of the body portion.

3. The variable vehicle of claim 2, wherein the link portion connecting the wheels is unfolded in response to a distance between adjacent wheels being increased by the drive device.

4. The variable vehicle of claim 2 or 3, wherein the extension portion is connected to a bent point of the link portion.

5. The variable vehicle of any one of claims 1 to 4, wherein the extension portion includes:
a first extension portion that is moveable in a first direction based on a center of the body portion; and
a second extension portion that is moveable in a second direction intersecting the first direction.

6. The variable vehicle of claim 5, wherein the first extension portion and the second extension portion are individually movable based on the driving of the wheel.

7. The variable vehicle of any one of claims 1 to 6, wherein the extension portion is connected to the link portion through a connecting pin, and
wherein the connecting pin is seated inside a guide hole formed on the lower side of the body portion to slide inside the guide hole depending on the arrangement of the link portion.

8. The variable vehicle of claim 7, further comprising a brake disposed at a portion where the connecting pin and the guide hole come into contact,
wherein the brake is configured to fix a position of the connecting pin.

9. The variable vehicle of claim 8, further comprising a position sensor configured to detect the position of the connecting pin,
wherein the brake is further configured to fix the position of the connecting pin in response to the connecting pin being disposed at a position preset by a user.

10. The variable vehicle of any one of claims 1 to 9, further comprising an actuator provided on one side of the extension portion,
wherein the actuator is configured to provide a driving force in a direction of moving the extension portion toward the outside of the body portion.
